# EUROPEAN PATENT APPLICATION

(11) **EP 4 570 658 A1**
(43) Date of publication of application: **18.06.2025**
(21) Application number: 24163280.1
(22) Date of filing: 13.03.2024
(51) Int. Cl.: B64D 11/04, B65G 1/04

(54) **MEAL TRAY LOADING AND EXTRACTION SYSTEM**

(30) Priority: 13.12.2023 EP 23216460
(71) Applicant: B/E Aerospace, Inc., Winston-Salem, NC 27105 (US)
(72) Inventor: PANJER, Frederik Adrian Stephan, UT 3953BW Maarsbergen (NL)
(74) Representative: Dehns

(57) **Abstract**

A meal tray loader (500) comprising a frame (501), one or more tray support elements (502) configured to support one or more meal trays (102) horizontally in the frame (501) and a tray loading arm (510) configured to be moveable with respect to the frame (501) to simultaneously push each of the one or more meal trays (102) out of the frame (501) and into a heating cavity of an oven (200).

## Description

### TECHNICAL FIELD

The present invention relates to systems and methods for positioning meals and meal trays in ovens. The ovens may be galley ovens suitable for use on aircraft.

### BACKGROUND

Many modern passenger aircraft are equipped with means for preparing and serving food and drinks for passengers. Meals are typically prepared at sites external to the aircraft and are loaded onto the aircraft prior to departure. It is common practice to load meal carriers containing meals onto the aircraft. Said meal carriers comprise a frame with a number of inserted trays, on which pre-prepared meals are placed. The meal carriers containing meals can be placed directly inside a galley oven for heating. Between flights, the meal carrier is offloaded and replaced with a new meal carrier preloaded with fresh meals for the next flight. So that hot meals may be served to passengers soon after take-off, the pre-prepared meals are often loaded into a galley oven provided on the aircraft prior to take-off. Since the meals require a minimum time in the galley oven to be sufficiently heated, utilising the time during take-off ensures that the passengers wait as little time as possible before receiving their meals. Unfortunately, a common complaint of passengers and crew is that a smell of burning food pervades the cabin during heating of the meals. Investigation has shown that this burning smell is caused by fluids in the meals spilling from their containers onto the heating elements in the oven. This spillage occurs due to the tilting of the internal cabin environment with respect to the direction of gravity during take-off. Since the front end of the aircraft is at an elevated position with respect to the rear end, fluid in the meals tends to spill from the meal containers towards the back of the aircraft. As the heating elements are typically disposed in the rear of the heating cavities of galley ovens, the burning smell is more prevalent in galley ovens disposed at the rear of aircraft that are facing in forward aircraft direction. The present invention provides systems and methods for mitigating or completely avoiding spillage of fluid from meal containers, and the resultant burning smell, in galley ovens of aircraft during take-off.

### SUMMARY

According to one aspect of the present invention, a meal tray loader is provided, comprising a frame, one or more tray support elements configured to support one or more meal trays horizontally in the frame, and a tray loading arm configured to be moveable with respect to the frame to simultaneously push each of the one or more meal trays out of the frame and into a heating cavity of an oven.

The one or more tray support elements may be configured to support a plurality of meal trays in a vertically stacked arrangement.

The meal tray loader may further comprise a motor configured to drive the movement of the tray loading arm with respect to the frame.

The motor may be configured to be connected to and powered by a battery installed in the meal tray loader.

The motor may be configured to be connected to and powered by a mains power supply.

The tray loading arm may be provided with one or more attachment means, said attachment means being configured to form an attachment between the one or more meal trays in the frame and the tray loading arm.

The attachment means may be a magnetic material configured to induce an attractive magnetic force between the attachment means and a magnetic surface on the one or more meal trays.

The attachment means may be an adhesive material configured to form an adhesive bond between the one or more meal trays in the frame and the tray loading arm.

The attachment means may be one or more latches disposed on the tray loading arm.

The one or more latches may be selectively actuatable to form an attachment between the one or more meal trays and the tray loading arm.

The one or more latches may be provided with a handle, said handle being operable by a user to actuate said one or more latches.

An actuating mechanism may be provided, configured to actuate the one or more latches automatically upon extraction of meal trays from an oven heating cavity, or on command.

A method of loading one or more meal trays into an oven heating cavity is also provided, comprising simultaneously pushing said one or more meal trays out from a frame in a meal tray loader with a tray loading arm, said tray loading arm being movable with respect to the frame.

The method may further comprise forming an attachment between the tray loading arm and one or more trays in an oven heating cavity and moving the tray loading arm with respect to the frame of the meal tray loader such that the one or more meal trays are extracted from the oven heating cavity.

### BRIEF DESCRIPTION OF THE DRAWINGS

Figure 1A illustrates an example known galley oven as viewed from the front, with the oven door closed.
Figure 1B illustrates a galley oven as depicted in Figure 1A, but with the oven door open.
Figure 1C illustrates a side cross-section view of the galley oven shown in Figures 1A and 1B.
Figure 1D illustrates a side cross-section view of the galley oven shown in Figures 1A and 1B in a tilted orientation.
Figure 2A illustrates a galley oven according to the present disclosure comprising adaptive tray positioning means.
Figure 2B illustrates the galley oven of Figure 2A in a tilted orientation.
Figure 2C illustrates a galley oven similar to that of Figure 2B, in a different tilted orientation.
Figure 3 illustrates a tray for use in the galley oven of the present disclosure before and after adapted positioning thereof during take-off.
Figure 4A illustrates a linear actuator system implemented to execute adaptive tray positioning in a galley oven of the present disclosure.
Figure 4B illustrates an electric motor pulley system implemented to execute adaptive tray positioning in a galley oven of the present disclosure.
Figure 5 illustrates a meal tray loader of the present disclosure in use with an oven.
Figure 6 illustrates a first loading step in the use of the meal tray loader of Figure 5.
Figure 7 illustrates a second loading step in the use of the meal tray loader of Figure 5.
Figure 8 illustrates a third loading step in the use of the meal tray loader of Figure 5.
Figure 9 illustrates the steps of loading and extracting meal trays using a meal tray loader incorporating magnetic attachment means.
Figure 10 illustrates the process of loading meal trays using a meal tray loader incorporating a latching mechanism.
Figure 11 illustrates the process of extraction of meal trays using a meal tray loader incorporating a latching mechanism.

### DETAILED DESCRIPTION

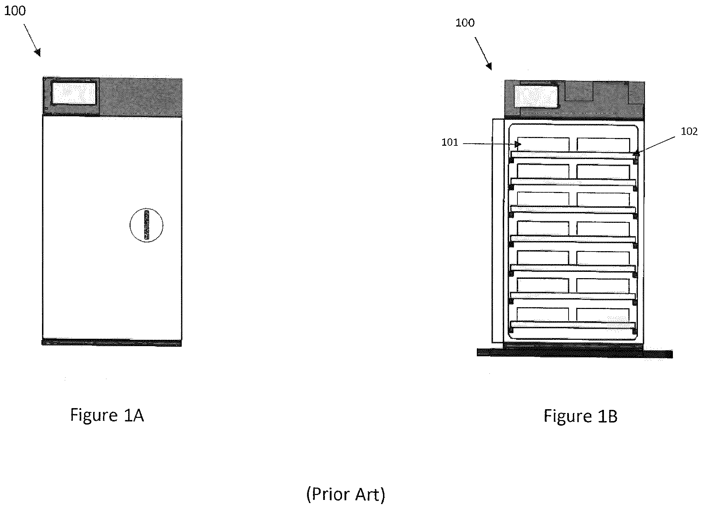

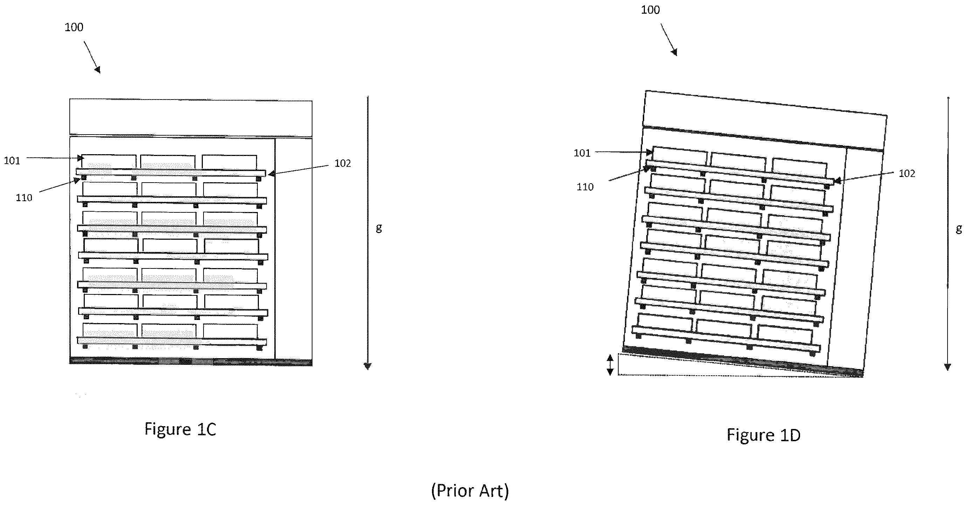

Figures 1A and 1B illustrate an example of a galley oven 100 used in aircraft. In both Figures 1A and 1B, the galley oven 100 is viewed from the front. In Figure 1A, the door of the galley oven 100 is closed. In Figure 1B, the door is open, and the heating cavity and contents thereof can be seen. As shown in Figure 1B, the heating cavity of the galley oven 100 is configured to hold a number of meal trays 102 in a vertically stacked arrangement. Each meal tray 102 is configured to support one or more meal containers 101. In operation, the door of the galley oven 100 is opened, the meal trays 102 meal containers 101 placed thereon are inserted into the oven 100, the door is closed and the meals contained in the meal containers 101 are heated to a desired temperature or for a particular length of time. In order to support the meal trays 102 in the heating cavity of the galley oven 100, the inner surface of the heating cavity thereof is provided with a number of tray supports 110. Configurations of tray supports 110 may vary between known galley ovens 100. In the example shown in Figures 1A to 1C, the inner surface of the heating cavity of the galley oven 100 is provided with a plurality of horizontally aligned supports 110 on each sidewall 214 of the heating cavity, arranged at the front (proximate the oven door) and rear of the heating cavity and at spaced intervals therebetween. The tray supports 110 ensure that meal trays 102 may be inserted and supported horizontally, with respect to the cabin floor, in vertically spaced layers in the galley oven 100.

For the majority of a flight segment, the cabin of an aircraft is orientated generally horizontally. That is, the floor of the aircraft cabin extends generally perpendicular to the direction of gravity. During these times, the tray supports 110 as shown in Figures 1A to 1C perform their function well. The meal trays 102 and meal containers 101 are maintained at a generally perpendicular orientation with respect to the direction of gravity and the contents of the meal containers 101 remain within the meal containers 101. However, during take-off and landing of an aircraft, the aircraft, and therefore also the cabin floor, necessarily, to gain or lose altitude, tilt such that they are no longer orientated perpendicular to the direction of gravity. As the galley oven 100 is fixedly mounted within the aircraft cabin, the oven 100 also experiences such tilting. This is illustrated in Figure 1D, where the arrow g represents the direction of gravity. If meals are already present in the galley oven 100 during take-off, which is often the case, this results in tilting of the meal containers 101 and, as a result, spilling of their contents. Any spillage of contents of the meal containers 101 is naturally problematic, necessitating cleaning and potentially affecting meal quality. However, one particular problem associated with such spillage is the contact of the spilled meal contents with hot surfaces, e.g. heating elements, within the heating cavity of the oven 100. The spilled meal contents, upon said contact, tend to burn and cause a strong odour to exit the oven 100. The burning odour can be so strong as to pervade the cabin and become noticeable to passengers, impacting their customer experience.

Although the heating cavity of the galley oven 100 as described in relation to, and as illustrated in, Figures 1A to 1D is configured to hold a number of meal trays 102 by virtue of the tray supports 110 provided on the inner surface of its heating cavity, many existing galley ovens do not comprise any such supports and are not themselves able to support meal trays therein. Such ovens are instead typically used with separate meal carriers (not shown). These meal carriers are formed of a frame configured to fit inside a galley oven heating cavity and to support a number of meal trays in a sliding arrangement therewith. Aircraft are typically loaded with one or more such meal carriers prior to a flight. The meal carriers are preloaded with full meal containers on their meal trays and can be placed directly into respective galley ovens to heat the meal containers on said trays. As would be expected, the problem of spillage of the contents of the meal containers during take-off and landing also arises with this meal carrier arrangement, as the meal trays of the meal carrier will tilt with respect to gravity during these flight segments in much the same way as if the trays were supported in the oven without the carrier.

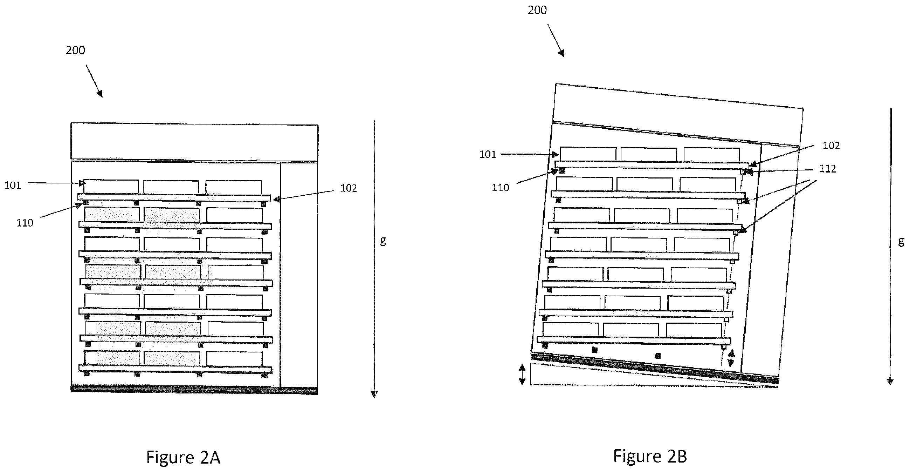

According to the present disclosure, a galley oven 200 as shown in Figures 2A and 2B, is provided. The structure of the galley oven 200 is similar to that of galley 100 as described in relation to Figures 1A to 1D. The galley oven 200 comprises a heating cavity and a door providing access to said heating cavity. Within the heating cavity is provided a support means configured to support a meal tray 102 within the heating cavity. For stability reasons, the support means may provide support for a meal tray at both a first, front end 210 of the heating cavity proximate the oven door and a second, rear end 212 proximate the rear of the oven heating cavity. In some embodiments, the support means may comprise a plurality of tray supports 110, 112. The tray supports 110, 112 are mounted to the sidewalls 214 of the heating cavity and at least two tray supports 110, 112 are configured to assume a number of different mounting positions with respect to the heating cavity sidewalls 214. In other words, at least two tray supports 110, 112 are configured to move in the plane of the heating cavity sidewall 214 to which they are mounted whilst remaining mounted to the said sidewall 214. The tray supports 110, 112 are configured to contact the lower surface of a meal tray 102 to support its weight with respect to the heating cavity. In some embodiments, the plurality of tray supports 110,112 comprises a first tray support pair 110 at the first end, one support of the pair on each sidewall 214, and a second tray support pair 112 at the second end, one support of the pair on each sidewall 214. The support means may further comprise one or more intermediate tray support pairs 111 arranged on the sidewalls 214 between the first and second tray support pairs 110, 112, arranged such that each support of each support pair simultaneously contacts a meal tray placed thereon. To achieve this, each tray support of each of the tray support pairs may lie within the same plane. The support means may be configured to, in a default unadjusted position, support a meal tray 102 such that the upper surface of the meal tray 102 is supported parallel to the floor of the aircraft cabin when the galley oven 200 is installed in an aircraft and the aircraft is on the ground. This configuration is illustrated in Figure 2A. In this figure, the galley oven 200 is shown as if installed in an aircraft cabin when the aircraft cabin floor is orientated generally perpendicular to the direction of gravity, represented by the arrow g in the figure. Such an orientation may correspond to taxiing or cruise portions of a flight segment or when the aircraft is grounded. As also illustrated in Figure 2A, the galley oven 200 may be provided with a plurality of the previously described support means. That is, the galley oven 200 may be configured to support a plurality of meal trays 102 simultaneously through said plurality of support means. Each support means of the plurality of support means may be arranged in the galley oven one above the other, i.e. in a vertically spaced, stacked arrangement as illustrated in Figure 2A.

Figure 2B illustrates the galley oven 200 in a situation where the oven 200 is installed in the rear end of an aircraft, such that the front end 210 of the heating cavity proximate the door faces the front end of the aircraft, and the aircraft has a positive pitch angle, which is non-perpendicular to the direction of gravity, g. When the tilting of the aircraft is referenced in this description, this also implies an equal tilting of the oven 200 and vice versa, since the oven 200 is assumed to be fixedly mounted to the aircraft. The magnitude of the aircraft pitch angle usually peaks during take-off and landing portions of a flight segment. In Figure 2B, a take-off portion is illustrated and the oven 200 is shown as if mounted in an aircraft with a positive pitch angle, i.e. the longitudinal axis of the aircraft is non-perpendicular to the direction of gravity. As mentioned previously, a common practice amongst commercial airlines is to load meals for passengers in the galley oven 200 prior to take-off. This means that the situation illustrated in Figure 1D is commonplace. In order to prevent spillage of the contents of the meal containers 101 placed on the meal tray 102, the oven is provided with an adjustment means configured to adjust the support means such that the upper surface of a meal tray 102 supported thereby is maintained in a generally perpendicular orientation with respect to the direction of gravity, of the upper surface of the meal tray 102, thereby preventing spillage of the contents of any meal containers 101 resting on the meal tray 102. The adjustment means can be configured to automatically make such adjustment in response to the tilting of the oven with respect to the direction of gravity, such as during take-off or landing.

Referring back to Figure 2B, in this embodiment, in order to counteract the effects of the tilting of the aircraft (and oven 200) during take-off, the adjustment means is configured to adjust the support means so as to adjust the position, i.e. raise and lower, the end of the meal tray 102 proximate the rear end 212 of the galley oven 200. This may be implemented through the provision of the second tray support pair 112 as previously described. Each tray support of the second tray support pair 112 may be configured to move with respect to the inner surface of the heating cavity of the oven 200 in response to said tilting of the aircraft. When the tray supports of the first tray support pair 110 proximate the front end 210 of the heating cavity remain in position, and the second tray support pairs 112 rise with respect to the inner surface of the heating cavity, i.e. towards the top of the oven 200, this results in tilting of the meal tray 102 with respect to the rest of the oven 200. As can be appreciated, this functionality can be used to maintain a meal tray 102 in a perpendicular orientation with respect to the direction of gravity during a take-off portion of the flight segment and tilting of the oven 200 with respect to said field.

In order to automate the function of the adjustment means, the oven 200 may be provided with a means for determining its tilt with respect to the direction of gravity. This may be an accelerometer or other sensor configured to output a parameter indicative of its orientation with respect to the direction of gravity. The means for determining the tilt of the aircraft and oven 200 may be connected in communication with a controller, also provided in the oven 200, capable of commanding the adjustment means to adjust the support means in any desired manner. In particular, the controller may be configured to receive an output from the means for determining the tilt of the aircraft and, in response, utilising this output, to control the adjustment means to adjust the support means to maintain the upper surface of a meal tray 102 supported thereby perpendicular to the direction of gravity. In the embodiments wherein the support means comprises a plurality of tray supports 110, 112, this would typically equate to raising or lowering two or more of the tray supports 110, 112 so as to counteract the tilt of the aircraft, i.e. to maintain the meal tray 102 in an orientation perpendicular to the direction of gravity.

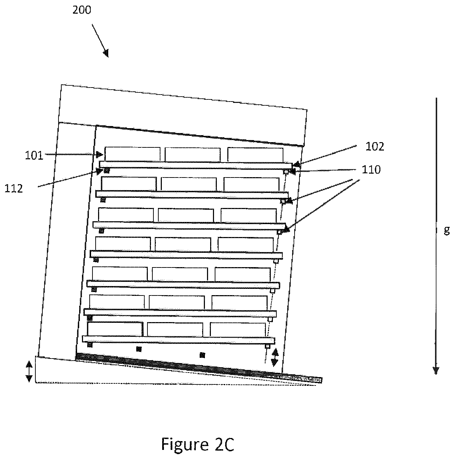

Figure 2C illustrates an oven 200 similar to the oven 200 shown in Figures 2A and 2B, also during a take-off portion of a flight segment. However, this oven 200 is configured to be located in a front portion of an aircraft cabin such that the door of the oven 200 faces the rear end of the aircraft. As can be appreciated, during take-off, the oven 200 illustrated in Figure 2C, due to its facing in an opposite direction to an oven 200 in the rear of the aircraft, as illustrated in Figure 2B, will tilt in an opposite direction to the latter. In other words, in Figure 2C, the front end 210 of the oven 200 will be lower than the rear end 212 during take-off. This means that, in the case where the support means comprises a front tray support pair 110 proximate the front end 210 of the oven 200 and a rear tray support pair 112 proximate the rear end 212 of the oven 200, the adjustment means is likely to raise the front tray support pair 110 with respect to the rear support pair 112 during take-off. This is contrast to the adjustment means of the oven 200 shown in Figure 2B, where the adjustment means would raise the rear tray support pair 112 relative to the front tray support pair 110.

Although specific embodiments have been discussed in which the front end of a meal tray 102 is raised with respect to its rear end, or vice versa, it should be appreciated that the adjustment means may adjust the support means to maintain orientation of a meal tray supported thereby perpendicular to the direction of gravity not only under non-zero pitch angle conditions but also under non-zero roll angle conditions. For example, in the embodiments in which the support means comprises a plurality of tray supports 110, 112, is it envisaged that the tray supports in a pair of tray supports may be raised or lowered unequally such that a "sideways" tilting of the meal trays 102 with respect to the oven 200, i.e. tilting around the roll axis, is achieved. The meal tray 102 may be tilted into any orientation with respect to the oven 200 either around the pitch axis, roll axis or a combination of both axes. As can be appreciated, This means that even upon sharp turning of the aircraft, during which the aircraft is tilted at a significant roll angle, the meal tray 102 in the oven 200 may be kept perpendicular to the direction of gravity to avoid spillage of meal contents. The ability of the adjustment means to adjust the support means to orientate the meal tray 102 in a combination of magnitudes in the roll and pitch axes means that meal spillage may be avoided when an aircraft turns, i.e. has a non-zero roll angle during a take-off or landing portion of a flight segment, for example.

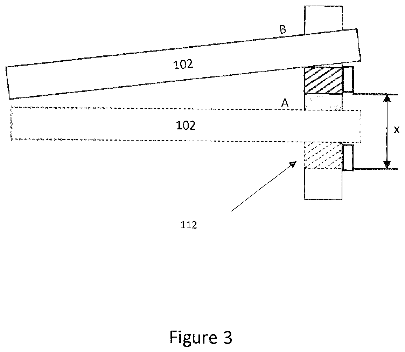

Figure 3 illustrates an example of a movable tray support 112 and meal tray 102 for use in an oven 200 of the present disclosure. The meal tray 102 shown in dotted lines in position A is supported by the support means in its default, unadjusted state. The tray support 112 shown in dotted lines in position A forms part of the support means in this embodiment. The tray support 112 is mounted to a sidewall 214 of the heating cavity of the oven 200. The tray support 112 is configured to be movable with respect to the heating cavity sidewall 214 by a distance x between positions A and B. The direction illustrated by the arrow x may be along a straight line between the upper and lower surfaces of the heating cavity. In other words, the direction x may be normal to the upper surface of a meal tray 102 when said meal tray 102 is supported by the support means in its default unadjusted state. As can be seen, moving the tray support 112 in a direction x affects the mounted position of the respective end of the meal tray 102 with respect to the heating cavity. This therefore can affect the orientation of the meal tray 102 with respect to the heating cavity. In some embodiments, at least two tray supports 112 are moveable with respect to the heating cavity to enable tilting of the meal tray 102 around at least one axis.

In other embodiments, four tray supports 110, 112 are positioned proximate each of the four corners of a meal tray 102 supported thereby, each tray support 110, 112 being configured to be movable, via an adjustment means, with respect to the heating cavity of the oven. This enables rotation of the meal tray 102 around either the roll axis, the perpendicular pitch axis or a combination of both of these axes, when the oven 200 is mounted in an aircraft.

In some embodiments, the support means may be provided with a biasing means (not shown) configured to bias the support means into its default unadjusted state. The biasing means is configured such that when the adjustment means is disengaged, the meal tray 102 returns to its position when supported by the support means in its default unadjusted state. This biasing means provides that no work is required to be performed by the adjustment means to return the support means towards its default unadjusted state. The adjustment means needs only to be able to adjust the support means away from its default unadjusted state. This may simplify the mechanism of the adjustment means or allow for particular mechanisms which would not function properly without said biasing means. The support means may be configured such that in its default unadjusted state, it supports a meal tray 102 such that the upper surface of the meal tray is parallel to the cabin floor. The cabin floor is assumed to be parallel to the longitudinal axis of the aircraft.

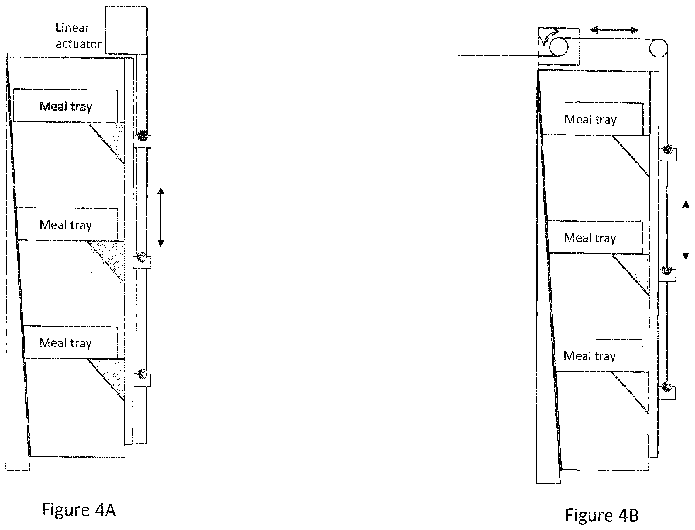

Although the aforementioned embodiments have been described with a single support means and meal tray 102 provided in the oven heating cavity, it should be appreciated that the oven 200 can comprise any number of similar support means. Said support means may be positioned one above the other as shown in Figures 2A-2C and 4A and 4B. Figures 4A and 4B illustrate two possible embodiments of the adjustment means as herein described. One way in which the support means may be adjusted, in terms of its position with respect to the oven heating cavity, is via a linear actuator mechanism. It is envisaged that each support means may be provided with one or more dedicated linear actuators configured to be controlled by a controller to adjust the support means so as to orientate a meal tray 102 supported thereby in any particular orientation around the roll and/or pitch axes. In embodiments where the support means comprises a plurality of tray supports 110, 112, each tray support may be provided with its own dedicated linear actuator, configured to move, or raise and lower, each tray support 110, 112 individually. However, in systems comprising a plurality of stacked support means to support a plurality of meal trays, one or more linear actuators may be provided to adjust the position of each of the support means in the same manner simultaneously.

In simpler systems, for example when only a front or rear pair of tray supports 110, 112 are configured to move with respect to the heating cavity, only a single linear actuator may be provided, configured to adjust the position of each tray support in the pair in the same manner simultaneously. In systems comprising a plurality of stacked said support means, as shown in Figure 4A, it is even considered that only a single linear actuator may be employed to adjust the positions of the front or rear pairs of tray supports 110, 112 of each support means in the same manner simultaneously.

Figure 4B illustrates the use of an electric motor and pulley system for performing the same function as the linear actuator(s) as previously described. An electric motor may be provided to pull a cable via one or more pulleys to exact an upwards force (towards to the upper surface of the heating cavity) on the support means. Just as with the linear actuator(s), a plurality of the electric motor and pulley systems may be provided for one support means. When the support means comprises at least four tray supports 110, 112, said four tray supports 110, 112 positioned in pairs at the front 210 and rear 212 ends of the heating cavity, each of the four tray supports 110, 112 may be provided with a separate motor and pulley system, to allow for individual control of each support and a full range of motion of a meal tray 102 positioned on the support means in either the roll or pitch axes or a combination of both. When the oven 200 is provided with a plurality of support means stacked one above another, as shown in Figure 4B, the electric motor and pulley system(s) may be configured to adjust the position of each support means in the same manner simultaneously.

In simpler systems wherein only a front or rear pair of tray supports 110, 112 are configured to move with respect to the heating cavity, a single electric motor and pulley system may be provided to adjust the position of each tray support 110, 112 in the pair simultaneously in the same manner. When a plurality of such support means are provided one above the other, actuation of the front or rear pairs of tray supports 110, 112 of each support means be simultaneously adjusted in the same manner simultaneously through just one motor and pulley system. A biasing means to bias the support means into its default unadjusted state is particularly useful for a system comprising an adjustment means in the form of an electric motor and pulley system, since the pulley system is only capable of exerting a force on the support means in one direction. The biasing means therefore provides an opposing force when adjustment of the support means in an opposite direction, towards the default unadjusted state is required. For safety and operability reasons, the adjustment means, be it a linear actuator, pulley, or other system, may be at least partially disposed external to the oven heating cavity.

One of the problems with implementing the adaptive positioning system for meal trays as described in relation to the ovens 200 of Figures 2A to 4B is that the tray supports 110, 112 may interfere with, or prevent, the insertion of existing meal carriers into their heating cavities, making such ovens 200 incompatible for use with said meal carriers. Even if existing meal carriers were still insertable into the heating cavities of such ovens 200, the meal trays positioned therein may not interact properly with the tray supports 110, 112 already provided in the oven. As such, the adaptive positioning functionality may be lost should such meal carriers be used. Of course, this problem could be addressed by individually inserting meal trays 102 into the ovens 200. It is clear, however, that this process would be much more time and manpower intensive than simply inserting whole, pre-loaded meal carriers into the ovens 200.

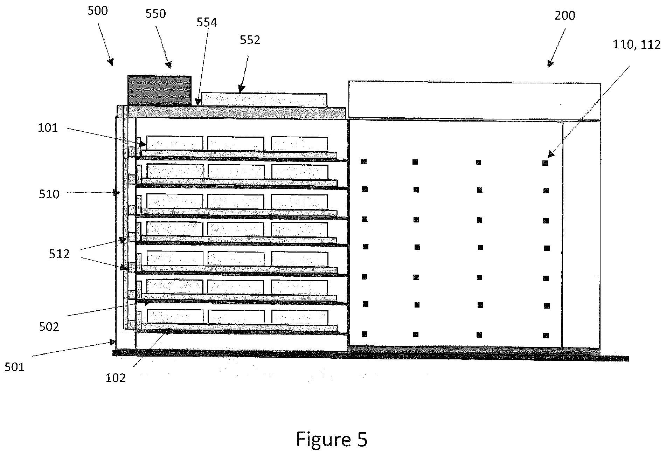

To address this problem, a meal tray loader 500 in accordance with the present invention and as depicted in Figure 5 may be utilised. Figure 5 is a sideview cross-section of the meal tray loader 500 and oven 200. The front of the meal tray loader 500 is perpendicular to the page and in contact with the oven 200, the back of the meal tray loader 500 is perpendicular to the page and opposite the front, to the left of the figure. The sides of meal tray loader 500 are parallel to the page on either side of the meal containers 101. The meal tray loader 500 supports meal trays in a similar way to existing meal carriers. The meal tray loader 500 comprises a frame 501 of similar dimensions to a heating cavity of an oven 200 for use with the meal tray loader 500. Within the frame 501 are provided one or more tray support elements 502 configured to support a meal tray 102 in the frame 501 horizontally. The tray support elements 502 may extend from the back of the meal tray carrier to the front along the sides of the frame 501, but not extend from one side to the other. The tray support elements 502 may take the form of elongate ridges disposed on the sides of the frame 501. The tray support elements 502 may also take the same structure as the tray supports 110, 112 of the oven 200. A number of tray support elements 502 may be provided so as to support two or more meal trays 102 in the frame 501 vertically spaced from one another. The meal tray loader 500 may be configured to support the same number of trays 102 as can be placed into the oven heating cavity on the supports 110, 112. In any case, the one or more tray support elements 502 are situated in the meal tray loader 500 so as to each vertically align with tray supports 110, 112 in the oven heating cavity.

The meal tray loader 500 further comprises a tray loading arm 510, which is movable with respect to the frame 501. More precisely, the tray loading arm 510 is configured to be able to be translated linearly from the back of the meal tray loader 500 to the front. One or more hands 512 may be provided as part of the tray loading arm 510. The number of hands 512 of the tray loading arm 510 corresponds to the number of vertically spaced meal trays 102 the frame 501 is configured to hold. Each hand 512 extends from the tray loading arm 510 towards a respective meal tray 102 loaded into the frame 501 and supported the tray support element(s) 502. Each hand 512 is configured to contact a respective meal tray 102 when the arm 510 is translated towards the front of the meal tray loader 500.

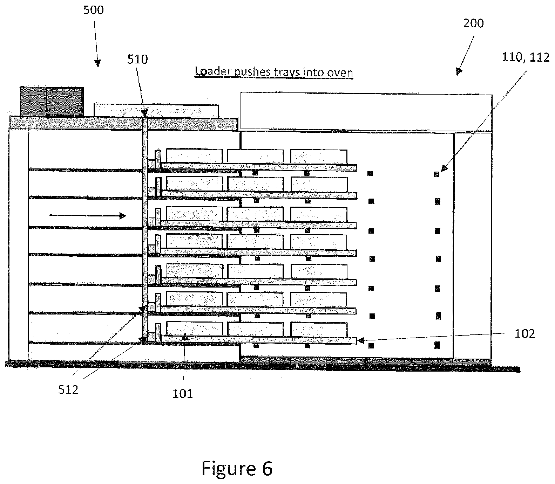

As shown in Figure 6, with the direction of motion of the tray loading arm 510 indicated by the arrow, the tray loading arm 510, when translated towards the front of the meal tray loader 500 is configured to push all loaded meal trays 102 simultaneously with respect to the frame 501 along the tray support elements 502 out of the frame 501 and onto corresponding tray supports 110, 112 in the heating cavity of an oven 200.

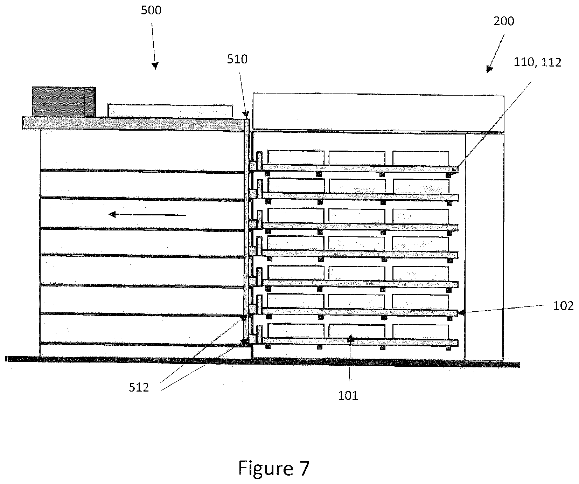

Figure 7 illustrates a state of the meal tray loader 500 in which the tray loading arm 510 has been translated all of the way from the back of the meal tray loader 500 to the front. Here, the meal trays 102 are fully inserted into the heating cavity of the oven 200 and supported by tray supports 110, 112 in the heating cavity. The arrow in this figure indicates the direction of motion of the tray loading arm 500, i.e. from the front to the back, in the following step.

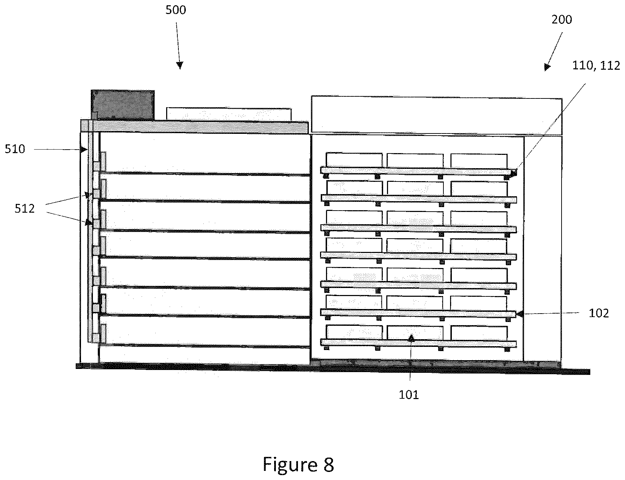

Figure 8 illustrates the last step of using the meal tray loader 500 to insert one or more meal trays 102 into a heating cavity of an oven 200. Here, once the meal trays 102 have been fully inserted, the tray loading arm 510 is retracted fully, i.e. translated back to its starting position at the back of the meal tray loader 500. This enables the loading of new meal trays 102 into the meal tray loader 500.

As well as providing the function of simplified and time-efficient loading of meal trays 102 into an oven 200, the meal tray loader 500 can also be used to quickly extract all meal trays 102 from the oven 200 after the meals thereon have been consumed. Typically, cabin crew will remove the meal containers 101 directly from the meal trays 102 in the oven 200 before they are served to passengers. The meal containers 101 will then typically be disposed of. In order to provide meal tray 102 extraction functionality to the meal tray loader 500, the tray loading arm 510 may be provided with an attachment means configured to fix the tray loading arm 510 to respective meal trays 102. The attachment means may be provided on each of the hands 512 when the hands are provided. As can be understood, when the process illustrated in Figures 6, 7 and 8 is reversed, and an attachment means is provided on the hands 512 configured to fix the hands to the meal trays 102, the meal tray loader 500 will be usable to extract simultaneously all meal trays 102 in the oven heating cavity.

Of course, if the attachment means were always present, or always active, i.e. always configured to fix the hand 512 to the meal tray 102 through the loading and extraction processes, loading the meal trays 102 would be difficult. This is because, at the loading step between the states shown in Figures 7 and 8, the tray loading arm 510 would undesirably drag the meal trays 102 from the oven heating cavity. To avoid this situation, the attachment means provided on the tray loading arm 510, and in some cases the one or more hands 512, may take the form of a magnet. In this case, the meal trays 102 may either be formed with a magnetic material or may comprise a corresponding magnetic element on their ends which are configured to contact the respective hand 512, said magnetic element giving rise to an attractive magnetic force between the magnet disposed on the hand 512 and respective meal tray 102.

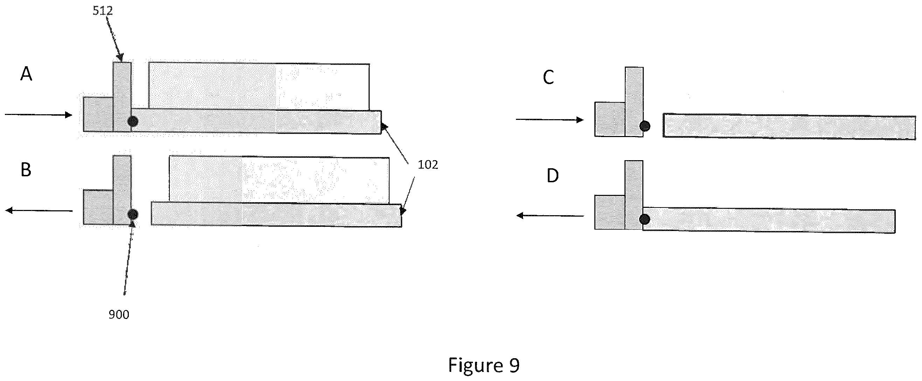

Figure 9 illustrates the use of a magnetic attachment means between the hands 512 of the tray loading arm 510 and the meal trays 102. As shown, a magnet 900 is provided attached to or integrated with the one or more hands 512. Here, as mentioned previously, the one or more meal trays will either be formed from a magnetic material or have a magnetic material attached thereto or integrated therein, such that there is a magnetic attraction between the magnet 900 of the hand 512 and a corresponding meal tray 102.

Step A of Figure 9 illustrates the interaction between a hand 512 and a meal tray 102 during loading of the meal tray 102 in an oven. Step A corresponds to the steps shown in Figures 5 and 6, where the hands 512 are in contact with the meal trays 102 and are pushed into the oven heating cavity. Step B represents the interaction between the hand 512 and the corresponding meal tray 102 between the steps shown in Figures 7 and 8, i.e. when the tray loading arm 510 is retracted towards the back of the meal tray loader 500, leaving the meal trays 102 in the oven. As can be seen in step B, despite the magnetic attraction between the hand 512 and the meal tray 102, the hand 512 still separates from the meal tray 102 when the tray loading arm 510 retracted. This occurs due to the weight of the meal containers 101 on the meal tray 102 causing a frictional force between the meal tray 102 and the tray supports 110, 112 in the oven heating cavity. The magnets 900 on the one or more hands 512 are configured to exert a weaker attractive force on the meal tray 102 than the opposite force of friction arising from the weight of the meal tray 102 and full meal containers 101 on the tray supports 110, 112 in the oven heating cavity.

Steps C and D of Figure 9 represent the process of extracting meal trays 102 from the oven heating cavity. In this case, meal containers 101 are no longer present on top of the meal trays 102. In step C, the meal tray loader 500 begins in a state as illustrated in Figure 8. The tray loading arm 510 is then translated towards the front of the meal tray loader 500 until the magnets 900 of the one or more hands 512 come into contact with the meal trays 102. Next, in step D, the tray loading arm 510 is retracted towards the back of the meal tray loader 500. Since the meal tray 102 no longer holds meal containers 101, its weight is reduced and the frictional force between the meal tray 102 and the tray supports 110, 112 in the oven heating cavity is less than during the loading process. As such, in this case, the force of attraction between the magnet 900 and the meal tray 102 is stronger than the frictional force acting in the opposite direction due to the weight of the meal tray 102, without meal container 101, on the tray supports 110, 112. In other words, the magnet 900 is configured so as to exert an attractive magnetic force on the meal tray 102 which is greater than the frictional force acting in the opposite due to the weight of a meal tray 102 without a meal container 101 on the tray supports 110, 112 in the oven.

Of course, the invention described in relation to Figure 9 generally relies on either the meal trays 102 being formed from a magnetic material, or having a magnet or magnetic material attached thereto or integrated therewith. Meal trays 102 for use in aircraft galley ovens are often made from aluminium for weight-saving purposes. Aluminium itself is not attractive to magnets. It may also be impractical or expensive to retrofit all meal trays 102 in use with magnetic elements so as to interact with magnets 900 on the hands 512 of a tray loading arm 510. For these reasons, it may be preferable to, instead of using magnets, using a form of reusable adhesive, or adhesive tape on the meal trays 102 and/or on the hands 512.

In this way, the magnet 900 as illustrated in Figure 9 can be completely replaced with an adhesive, such as reusable adhesive tape. The adhesive can be applied either to the hand 512 in a position such that it contacts the meal tray 102 when the hand 512 is brought into contact with the meal tray 102, or on the meal tray 102, such that it is contacted by the hand 512 when the hand 512 is brought into contact with the meal tray 102. The adhesive is configured to form an adhesive bond between the hand 512 and meal tray 102 which is stronger than the frictional force acting in the opposite direction due to the weight of an empty meal tray 102 on the tray supports 110, 112 in the oven heating cavity. The adhesive is however configured such that it forms an adhesive bond which is weaker than the frictional force acting in the opposite direction due to the weight of a meal tray 102 on which one or more meal containers 101 are placed on the one or more tray supports 110, 112. In this way, the adhesive performs exactly the same function as the magnet 900, allowing easy insertion of loaded meal trays 102 and subsequent detachment of the hands 512 from the loaded meal trays 102 and retraction of the tray loading arm 510 away from the meal trays 102 and oven cavity, whilst also providing that empty meal trays 102 may be easily extracted from the oven heating cavity due to attachment formed between the hands 512 and meal trays 102 by the adhesive. One example of an adhesive which may be used for this purpose is a sticky polyurethane adhesive tape, which may be cleaned with water when necessary to restore its function and provide longevity.

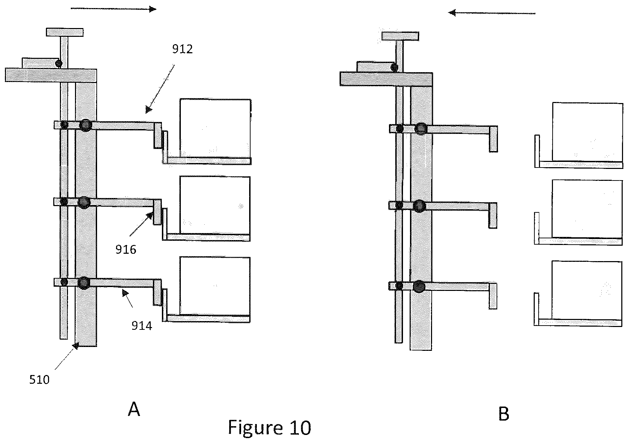

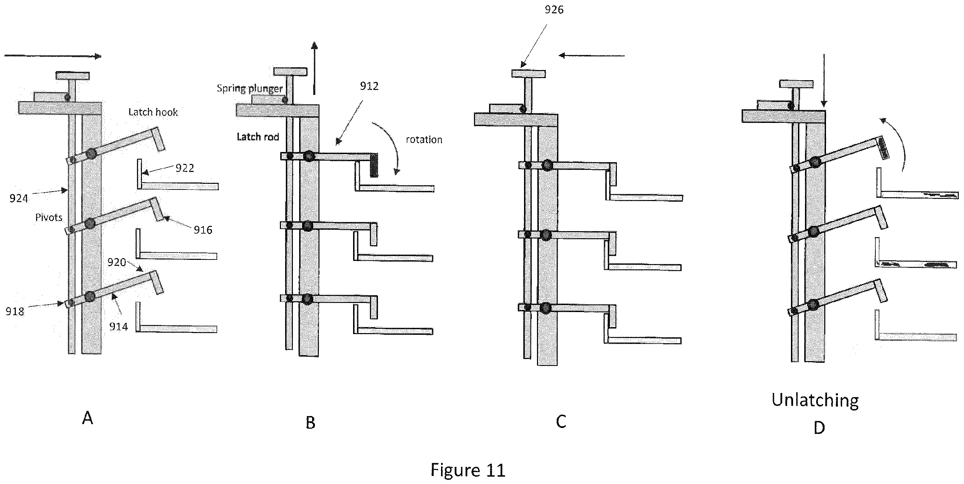

As an alternative to the magnet or adhesive solutions described above, an distinct mechanism for use in loading and extraction of meal trays 102 may be provided, one embodiment of which is illustrated in Figures 10 and 11.

Generally speaking, in order to provide meal tray extraction capability without the use of magnets or adhesive, the one or more hands 512 may be selectively attachable to the meal trays 102. In other words, the attachment means may in some way be togglable or actuatable to enable the attachment between the one or more hands 512 and their respective meal trays 102. In this way, upon loading, the attachment means may not be active, not providing any attachment between the hands 512 and meal trays 102. Upon extraction, the attachment means may be actuated in order to provide an attachment between the one or more hands 512 and respective meal trays 102. This enables both the loading and extraction function of the meal tray loader 500.

In some embodiments, as illustrated in Figure 10, in place of the one or more hands 512, the tray loading arm 510 may be provided with one or more latches 912. The number of latches 912 the arm 510 comprises may correspond with the number of meal trays 102 the meal tray loader 500 is configured to hold. The latches 912 are configured to provide an attachment between the tray loading arm 510 and respective meal trays 102. The latches 912 are actuatable such that a user can engage or disengage the latches 912 from the meal trays 102 at any point. This means that when an operator wishes to extract meal trays 102 from an oven 200 using the meal tray loader 500, the latches 912 may be actuated to form an attachment with respective meal trays 102, allowing the trays to be slid out of the oven 200 when the tray loading arm 510 is translated from the front of the meal tray loader to the back. The latches 912 may also be configured to abut the meal trays 102 without an attachment (engagement of the latch 912 with the meal tray 102). This means that the latches may be used in the same way as the hands 512 described in previous embodiments, i.e. the latches 912 may be configured to contact the meal trays 102 such that translation of the tray loading arm 510 from the back to the front of the meal tray loader 500 serves to push the meal trays 102 out from the frame 501 and into the oven heating cavity. This is shown in Figure 10, where step A is the pushing of the meal trays 102 into the heating cavity by abutment from the latches 912. Step B is the subsequent retraction of the tray loading arm 510 from the front of the meal tray loader 500 to the back after the meal trays 102 have been loaded into the oven 200.

As shown in Figures 10 and 11, the latches 912 may be generally L-shaped, with a first portion 914 configured to extend from a first end 918 to a second end 920 in a direction from the back to the front of the meal tray loader 500, from the tray loading arm 510 towards respective meal trays 102 loaded into the meal tray loader 500, and a second portion 916 extending from the second end 920 of the first portion 914 generally perpendicular to the first portion 914. The first portion 914 may be attached in a pivoting relationship with the tray loading arm 512 such that when the first portion 914 pivots with respect to the tray loading arm 512, the second end 920 moves upwards and the first end 918 moves downwards and vice versa. The second portion 916 of the latch 912 is configured to interact with an attachment feature 922 on a meal tray 102 so as to provide attachment between the latch 912 and the meal tray 102. The attachment between the latch 912 and the attachment feature 922 of the meal tray 102 may be materialized by pivoting of the first portion 914 of the latch 912 so as to raise the second end 920 and therefore also the second portion 916, moving the tray loading arm 510 towards the meal tray 102 such that the latch is positioned above the meal tray attachment feature 922, and pivoting the latch 912 in an opposite direction to previously so as to engage the second portion 916 with the attachment feature 922 of the meal tray 102. Once this engagement has been achieved, the tray loading arm 512 may be retracted from the front of the meal tray loader 500 to the back. Due to the attachment between the one or more latches 912 and corresponding meal trays 102, the meal trays will be withdrawn from the oven heating cavity.

This process is illustrated in Figure 11, where step A represents the moving of the tray loading arm 512 towards the meal trays 102 in the oven heating cavity. Step B represents the pivoting of the first portion 914 of the latch with respect to the tray loading arm 512 so as to lower the second portion 916 towards the meal tray 102 and to engage the second portion 916 with the attachment feature 922 of the meal tray 102. Step C represents the subsequent retraction of the tray loading arm 512 to withdraw the meal trays 102 from the oven heating cavity. Step D represents the eventual unlatching of the meal trays 102, enabling removal of the meal trays 102 from the meal tray loader 500 for cleaning, replacement or maintenance. The arrows above the figures represent the direction of motion of the tray loading arm 512. The curved arrow above the figure representing step B indicates the direction of motion of the pivoting latch 912.

As shown in Figures 10 and 11, the meal tray loader may further be provided with a pivot arm 924. The pivot arm 924 may extend along the length of the tray loading arm 512 and be pivotally connected with the first ends 918 of the first portions 914 of each latch 912. As can be appreciated, and seen in the Figures, the translation of the pivot arm 924 with respect to the tray loading arm 512, due to the pivotal connections of each component with the latches 912, results in pivoting of the first portions 914 of the latches 912 with respect to the tray loading arm 512. Therefore, when the pivot arm 924 is raised upwards with respect to the meal tray loader 500, each latch 912 is equally and simultaneously pivoted with respect to the tray loading arm 512. The pivot arm 924 therefore provides a simple way for an operator to simultaneously engage each latch 912 of the one or more latches 912 with respective meal trays 102 when extracting the meal trays 102 from the oven heating cavity. To further facilitate this, the pivot arm 924 may be provided with a handle 926 at its upper end. The pivot arm 924 may also be provided with a biasing means configured to bias the latches 912 into either a latched position or an unlatched position.

It is also envisaged that the latches 912 may be electrically actuated through either an electrically controlled pivot arm 924 or by individual actuating mechanisms associated with each individual latch 912. For example, the meal tray loader 500 could be equipped with a linear motor (not shown) configured to raise and/or lower the pivot arm 924 with respect to the tray loading arm 512 so as to simultaneously pivot each latch 912 with the tray loading arm 512. Alternatively, the tray loading arm 512 may be equipped with one or more rotary actuators positioned around each pivot point between the latches 912 and the tray loading arm 512, configured to pivot the latches 912 with respect to the tray loading arm 512 on command.

In any of the abovementioned embodiments of the meal tray loader 500, the movement of the tray loading arm 512 with respect to the meal tray loader 500, i.e. between the front and back of the frame 501, may be powered by a motor 550. In order to provide linear motion of the tray loading arm 512 with respect to the frame 501, a linear spindle drive may be provided. The operation of the motor may be controlled by a controller 552 included in the meal tray loader 500. Since the meal tray loader 500 is intended to be mobile and taken onto and off an aircraft, it is unlikely to always have access to a suitable wired energy source. For this reason, the meal tray loader 500 may comprise a battery (not shown) configured to supply power to the motor 550 and/or the actuating mechanisms of the pivot arm 924 and rotary actuators configured to cause pivoting of the latches 912 with respect to the tray loading arm 512, if these are present in the loader 500.

As discussed above, the meal tray loader 500 of any of the described embodiments is particularly useful for use with ovens 200 with tray supports 110, 112 disposed in their heating cavities, as these may not be shaped or sized to contain existing meal carriers. The meal tray loader 500 of the present invention makes the need for placing entire meal carriers inside oven heating cavities redundant or unnecessary, by virtue of the greatly improved time-efficiency and simplicity. The weight saving provided by using such a meal tray loader 500 in place of a meal carrier is beneficial for use with all kinds of galley oven, even those which are configured to contain a meal carrier in their heating cavities.
Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A meal tray loader (500), comprising:
a frame (501);
one or more tray support elements (502) configured to support one or more meal trays (102) horizontally in the frame (501);
a tray loading arm (510) configured to be moveable with respect to the frame (501) to simultaneously push each of the one or more meal trays (102) out of the frame (501) and into a heating cavity of an oven (200).

2. The meal tray loader of claim 1, wherein the one or more tray support elements (502) are configured to support a plurality of meal trays (102) in a vertically stacked arrangement.

3. The meal tray loader of claim 1 or 2, further comprising a motor (550) configured to drive the movement of the tray loading arm (512) with respect to the frame (501).

4. The meal tray loader of claim 3, wherein the motor (550) is configured to be connected to and powered by a battery installed in the meal tray loader (500).

5. The meal tray loader of claim 3 or 4, wherein the motor (550) is configured to be connected to and powered by a mains power supply.

6. The meal tray loader of any of claims 1 to 5, wherein the tray loading arm (512) is provided with one or more attachment means, said attachment means being configured to form an attachment between the one or more meal trays (102) in the frame (501) and the tray loading arm (512).

7. The meal tray loader of claim 6, wherein the attachment means is a magnetic material configured to induce an attractive magnetic force between the attachment means and a magnetic surface on the one or more meal trays (102).

8. The meal tray loader of claim 6, wherein the attachment means is an adhesive material configured to form an adhesive bond between the one or more meal trays (102) in the frame (501) and the tray loading arm (512).

9. The meal tray loader of claim 6, wherein the attachment means is one or more latches (912) disposed on the tray loading arm (512).

10. The meal tray loader of claim 9, wherein the one or more latches (912) are selectively actuatable to form an attachment between the one or more meal trays (102) and the tray loading arm (512).

11. The meal tray loader of claim 10, wherein the one or more latches (912) are provided with a handle, said handle being operable by a user to actuate said one or more latches (912).

12. The meal tray loader of claim 9 or 10, wherein an actuating mechanism is provided, configured to actuate the one or more latches automatically upon extraction of meal trays (102) from an oven heating cavity, or on command.

13. A method of loading one or more meal trays into an oven heating cavity, comprising: simultaneously pushing said one or more meal trays out from a frame in a meal tray loader with a tray loading arm, said tray loading arm being movable with respect to the frame.

14. The method of claim 13, further comprising:
forming an attachment between the tray loading arm and one or more trays in an oven heating cavity;
moving the tray loading arm with respect to the frame of the meal tray loader such that the one or more meal trays are extracted from the oven heating cavity.
